Europäisches Patentamt

(19) European Patent Office

Office européen des brevets

(11) Numéro de publication: **0 051 021**
**B1**

(12) **FASCICULE DE BREVET EUROPEEN**

(45) Date de publication du fascicule du brevet: **08.01.86**

(21) Numéro de dépôt: **81401643.2**

(22) Date de dépôt: **20.10.81**

(51) Int. Cl.⁴: **B 01 F 5/04,** B 01 F 3/04,
B 04 C 3/00, B 01 F 5/06

(54) Procédé de dispersion sous forme fine d'un fluide dans une veine fluide de densité supérieure, notamment d'un gaz dans un liquide et dispositif pour sa mise en oeuvre.

(30) Priorité: **28.10.80 FR 8023001**
**18.09.81 FR 8117654**

(43) Date de publication de la demande:
**05.05.82 Bulletin 82/18**

(45) Mention de la délivrance du brevet:
**08.01.86 Bulletin 86/02**

(84) Etats contractants désignés:
**AT BE CH DE FR GB IT LI LU NL SE**

(56) Documents cités:
**BE-A- 404 938**
**DE-A-1 557 169**
**DE-A-1 907 278**
**DE-A-2 620 634**
**DE-C- 631 458**
**FR-A-2 062 295**
**FR-A-2 121 064**
**NL-A-7 905 844**
**US-A-1 437 649**
**US-A-1 839 952**
**US-A-1 853 045**
**US-A-2 767 840**
**US-A-3 006 622**
**US-A-3 600 817**

(73) Titulaire: **CENTRE NATIONAL DU MACHINISME AGRICOLE, DU GENIE RURAL, DES EAUX ET DES FORETS (CEMAGREF)**
**Parc de Tourvoie**
**F-92160 Antony (FR)**

(72) Inventeur: **Arbeille, Yves**
**Parc de Tourvoie**
**F-92160 Antony (FR)**
Inventeur: **Lucas, Jean**
**Parc de Tourvoie**
**F-92160 Antony (FR)**

(74) Mandataire: **Lemonnier, André et al**
**Cabinet LEMONNIER 4, Boulevard Saint-Denis**
**F-75010 Paris (FR)**

Courier Press, Leamington Spa, England.

# Description

La présente invention a pour but d'assurer la dispersion homogène d'un gaz dans un liquide sous forme de bulles fines et plus généralement de disperser dans un fluide primaire un fluide secondaire de densité très inférieure sous forme de bulles ou de gouttelettes fines.

Jusqu'ici pour introduire un gaz dans un liquide dans un état aussi subdivisé que possible, on a utilisé des dispositifs mettant en oeuvre un laminage d'un ou des deux fluides, l'effet de choc entre les deux fluides, le filtrage ou le battage mécanique du mélange après sa formation.

Les inconvénients de ces dispositifs sont les pertes énergétiques qui résultent de leur mise en oeuvre, la complexité des dispositifs mécaniques à mettre en oeuvre et leur tendance à se colmater rapidement. De plus, la recoalescence des bulles formées est une limitation à la finesse du mélange.

La présente invention a pour but de remédier à ces inconvénients.

Sans vouloir être limités en aucune manière par cette théorie, les inventeurs expliquent le procédé de l'invention par la mise en oeuvre d'un phénomène de rupture de la stabilité géométrique de l'interface entre deux fluides de densités différentes lorsque l'ensemble est soumis à une variation du champ d'accélération. Sous l'effet des forces volumiques induites par le champ d'accélération, les gradients de pression au voisinage de l'interface entre les deux fluides rompent l'équilibre géométrique de cet interface en faisant évoluer localement le rayon de courbure jusqu'à ce que les forces de capillarité d'interface correspondantes rétablissent l'équilibre. Dans le cas de la dispersion d'un fluide léger dans un fluide de densité supérieure, cette évolution va dans le sens d'une diminution des rayons de courbure des éléments du fluide léger, c'est-à-dire d'une diminution du volume moyen de ces éléments. Cette décomposition vers une granulométrie fine se réalise par rupture à la fin d'une déformation géométrique continue.

Ce phénomène ne peut se réaliser que par un déplacement relatif des deux fluides, le fluide lourd se déplaçant dans le sens du champ d'accélération créé et le fluide léger dans le sens contraire. La configuration initiale des deux fluides doit donc permettre cette évolution sans aboutir prématurément à un nouvel état d'équilibre.

Le phénomène physique ci-dessus à la différence des procédés antérieurs n'induit pas quasi intrinsèquement la recoalescence de l'élément le plus léger immédiatement après la dispersion.

L'application de ce principe de dispersion au mélange et à la dispersion de quantités importantes de fluides nécessite l'utilisation d'un procédé continu, c'est-à-dire s'appliquant localement à un courant de deux fluides, ces fluides présentant dans ce courant un interface commun.

Le procédé conforme à l'invention pour disperser sous forme fine un fluide dans une veine fluide de densité supérieure notamment un gaz dans un liquide dans lequel on fait circuler le fluide de densité supérieure sous forme d'une veine fluide à grande vitesse et fait suivre à cette veine une trajectoire courbe créant dans la veine un gradient de pression perpendiculaire à la paroi résultant de la force centrifuge, est caractérisé en ce que l'on fait circuler le liquide dans une canalisation présentant une courbure de sens constant au moins sur une certaine distance et introduit le gaz sous pression directement dans le liquide à travers au moins un orifice réalisé dans la paroi de la partie courbe de la canalisation ayant le rayon de courbure le plus grand, c'est-à-dire la paroi le long de laquelle la pression dans le fluide est, du fait du gradient de pression, la plus élevée, ledit orifice étant situé au moins à une certaine distance de l'extrémité aval de ladite partie courbe dans une zone où règne le gradient de pression.

Selon une autre caractéristique on fait circuler le liquide dans un Venturi à noyau axial dont la fibre moyenne de la section de passage en aval du col est concave vers l'extérieur et introduit le gaz à disperser dans ce liquide par un orifice situé sur la paroi du noyau sensiblement au col du Venturi.

De préférence et selon ce mode de réalisation le gaz est aspiré dans la veine liquide par la dépression créée au col du Venturi et il est possible de régler le débit du gaz aspiré en montant élastiquement, par rapport à la partie amont, la partie aval du noyau axial du Venturi qui délimite avec la partie amont la fente d'aspiration du gaz.

On décrira ci-après divers exemples de réalisation de l'invention avec référence aux dessins ci-annexés dans lesquels:

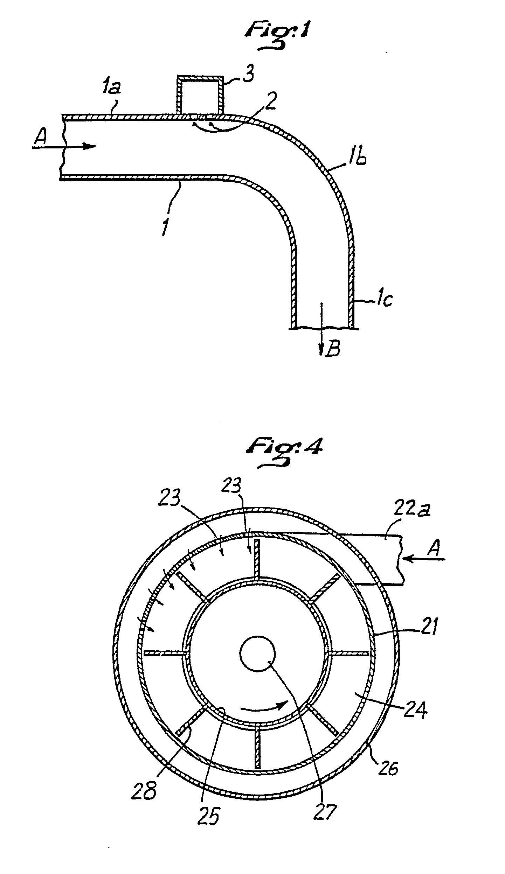

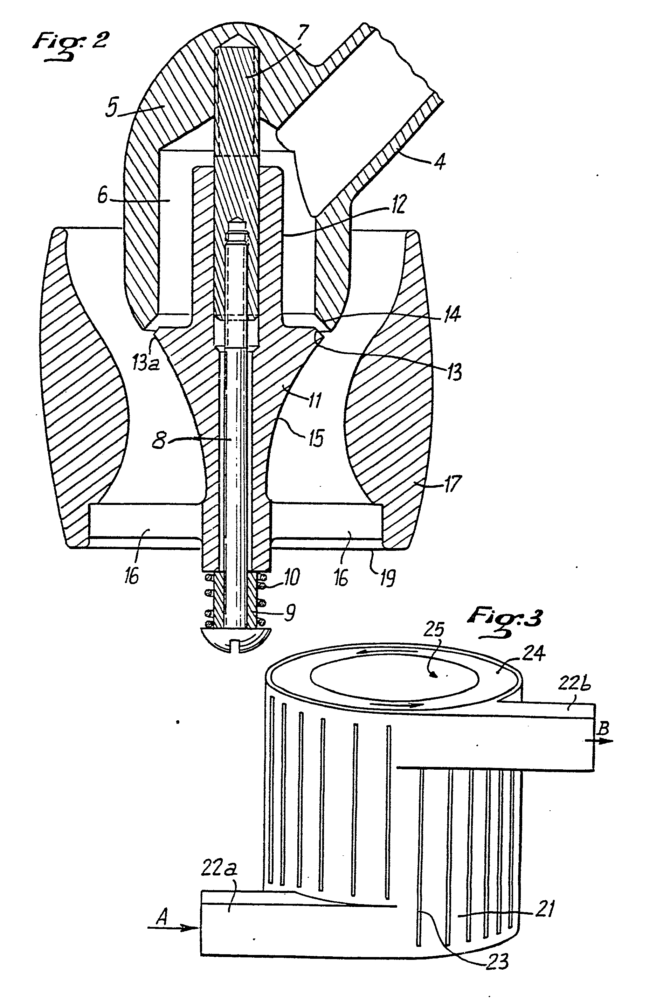

La figure 1 est un schéma explicatif du procédé de l'invention; la figure 2 est une vue en coupe longitudinale d'une tuyère susceptible d'être montée sur une pale d'hélice pour aérer, par dispersion d'air dans ce liquide, le liquide brassé par cette pale; la figure 3 est une vue en perspective schématique d'un dispositif pour l'introduction d'une grande quantité d'un fluide léger dans une veine de liquide et la figure 4 est une vue en coupe par un plan horizontal de la figure 3 d'une variante de ce mode de réalisation.

Comme illustré dans le schéma de la figure 1, le dispositif pour la mise en oeuvre du procédé comporte une canalisation (1) pour la circulation du fluide ayant la plus grande densité, par exemple un liquide, qui est introduit en A. Cette canalisation est par exemple de section rectangulaire et comporte, de l'amont vers l'aval, une longueur rectiligne (1a), une partie courbe (1b) et une partie aval rectiligne (1c). Conformément au procédé de l'invention, on introduit à travers des fentes (2) situées immédiatement en amont de la partie courbe (1b) et réalisées dans la paroi de la canalisation qui forme la paroi ayant le plus grand rayon de courbure de ladite partie courbe, le fluide le plus léger, notamment le gaz, à disperser dans la veine de fluide ayant la densité la plus élevée. Le gaz peut être introduit sous pression à travers les fentes (2) en étant comprimé dans la chambre (3). La dispersion stable avec des bulles de gaz extrèmement fines est évacuée par la canalisation en B.

Dans le mode de réalisation de la figure 2, (4) désigne le tube d'amenée de l'air lequel constitue également l'organe de solidarisation entre la pale d'hélice (non représentée) et le dispositif conforme à l'invention.

Ce tube (4) aboutit à un corps ovoïde (5) dans lequel est réalisée une chambre cylindrique ouverte (6) avec, dans l'axe de cette chambre, une tige (7) qui est taraudée à son extrémité libre, son autre extrémité étant vissée dans un taraudage axial au fond de la chambre (6). Dans le taraudage de la tige (7) se visse le filetage d'une vis (8) sur laquelle est enfilé un manchon formant butée (9) et un ressort hélicoïdal (10). Le manchon (9) et le ressort hélicoïdal (10) forment respectivement une butée de fin de course et un rappel élastique pour la tuyère proprement dite. Celle-ci est constituée par un noyau central (11) qui est monté coulissant, par son extrémité tubulaire (12), sur la tige (7) et qui vient s'emboîter, par une portée tronconique (13) entourant cette extrémité tubulaire (12), sur la portée tronconique (14) entourant l'orifice de la chambre (6), cette portée tronconique (13) se prolongeant par une surface de révolution concave (15) dont la génératrice est sensiblement un arc de cercle et dont la section la plus faible se trouve près de l'extrémité libre du noyau central. Dans la partie de gauche de la figure, on a représenté en (13a) une variante de réalisation selon laquelle la partie tronconique (13) a une largeur réduite de manière que son bord externe se trouve en retrait par rapport aux filets fluides quittant la surface du corps ovoïde (2) au droit de l'arête de la portée (14). Avec cette variante il se forme un interface partant de ladite arête et le débit gazeux est amélioré. Au droit de l'extrémité libre du noyau central qui coopère avec les ressort (10) et éventuellement le manchon (9) sont fixées des ailettes radiales (16) qui portent la buse (17) ou chemise périphérique de la tuyère. La surface extérieure de cette buse est cylindricoconvexe tandis que sa surface de revolution interne (18) présente une génératrice telle qu'entre cette surface et le corps ovoïde (5), respectivement le noyau central (11), est ménagé un passage dont la section décroit sensiblement jusqu'au droit de l'arête de la portée tronconique (14) pour croître ensuite progressivement jusqu'à l'orifice de sortie (19).

La tuyère ainsi réalisée fonctionne en Venturi avec une dépression au col au droit des portées coniques (14—13) en ensuite une recompression avec établissement d'un gradient de pression sur la section, la pression au contact de la surface (15) étant plus élevée qu'au contact de la paroi (18) du fait de l'incurvation des filets fluides. Il se produit une force de trainée longitudinale sur la buse (17), ce qui se traduit par un décollement de la surface (13) de la surface (14) avec compression du ressort (10), l'air étant aspiré par le tube (4), la chambre (6) et la fente entre les portées (13) et (14). Le flux d'air ainsi introduit est soumis à une striction par les filets fluides à écoulement non tourbillonnaire en même temps que les bulles les plus grosses se déplacent vers la paroi (18) en étant subdivisées par le phénomène de rupture de stabilité de l'interface ci-dessus décrit. On obtient finalement une dispersion homogène et fine de l'air dans le flux liquide évacué par la sortie (19).

Les dispositifs illustrés dans les figure 3 et 4 sont constitués par un cylindre périphérique (21) aux extrémités supérieure et inférieure duquel sont raccordées deux conduites de section rectangulaire (22a et 22b). Ces conduites (22a et 22b) débouchent tangentiellement à la paroi du cylindre (21) et sont orientées en opposition de manière que le fluide introduit en A par la conduite (22a) prenne, au contact de la paroi, un mouvement hélicoïdal ascendant et sorte en B par la conduite (22b). Des fentes fines (23), parallèles à l'axe du cylindre (21), sont réalisées dans la paroi de celui-ci (seules quelques unes d'entre elles sont représentées dans la figure 4). Les extrémités du cylindre sont fermées par des parois (24) qui peuvent être complètes ou annulaires. Lorsqu'elles sont annulaires, il peut être prévu une paroi cylindrique intérieure (25) mais cette paroi n'est pas indispensable, le liquide introduit en A circulant en étant plaqué contre la paroi (21) et sortant en B. Une enveloppe périphérique (26) est prévue à l'extérieur de la paroi (21) pour former avec cette paroi une chambre de pression. Cette enveloppe périphérique (26) peut être de forme quelconque. Cette chambre périphérique est reliée à une source d'alimentation sous pression du fluide de plus faible densité à disperser dans le liquide introduit en A. Cette chambre peut être isolée thermiquement et comporter éventuellement des moyens d'échange thermique pour surchauffer la vapeur lorsque le fluide de. faible densité est une vapeur surchauffée.

Dans la variante de réalisation de la figure 4, la paroi (25) est susceptible d'être entraînée en rotation par un arbre (27) et sa paroi périphérique est munie de pales radiales (28) de sorte que le dispositif entretient le mouvement de centrifugation du fluide le plus lourd et de la dispersion.

A titre d'exemple d'un appareil pour stériliser du lait par condensation de vapeur d'eau, le cylindre (21) a un diamètre d'environ 40 millimètres et une hauteur de 80 millimètres, les raccords (22a et 22b) ayant une section d'environ 50 millimètres carrés et les fentes (23) au nombre d'environ vingt cinq ayant une largeur de 0,3 mm. Le lait est introduit avec une vitesse de 5 à 10 mètres par seconde, de préférence 7 mètres/seconde, soit un débit de 0,35 litre par seconde. La vapeur saturée est à une température de 170°C sous une pression d'environ 8 bars. La pression dans la veine de lait est légèrement inférieure à la pression de la vapeur afin de permettre l'introduction de celle-ci.

La vapeur qui pénètre par les fentes (23) avec un débit d'environ 25 litres par seconde est dispersée sous forme de bulles très fines qui se condensent très rapidement en traversant la masse de lait sous l'effet de la centrifugation.

·Dans son parcours hélicoïdal, la température du lait augmente donc très rapidement de manière homogène, ce qui assure une stérilisation efficace.

L'invention est susceptible également de nombreuses autres applications comportant la dispersion de gaz dans des liquides.

## Revendications

1. Un procédé de dispersion sous forme fine d'un fluide dans une veine fluide de densité supérieure dans lequel on fait circuler le fluide de densité supérieure sous forme d'une veine fluide à grande vitesse et fait suivre à cette veine une trajectoire courbe créant dans la veine un gradient de pression perpendiculaire à la paroi résultant de la force centrifuge, caractérisé en ce que l'on fait circuler le liquide dans une canalisation présentant une courbure de sens constant au moins sur une certaine distance et introduit le gaz sous pression directement dans le liquide à travers au moins un orifice réalisé dans la paroi de la partie courbe de la canalisation ayant le rayon de courbure le plus grand c'est-à-dire la paroi le long de laquelle la pression dans le fluide est, du fait du gradient de pression, la plus élevée, ledit orifice étant situé au moins à une certaine distance de l'extrémité aval de ladite partie courbe dans une zone où règne le gradient de pression.

2. Un procédé de dispersion d'un fluide dans une veine fluide de densité supérieure selon la revendication 1, caractérisé en ce que l'on fait circuler le liquide dans un Venturi à noyau dont la fibre moyenne de la section de passage en aval du col est concave vers l'extérieur et introduit le gaz à disperser dans ce liquide par un orifice situé sur la paroi du noyau sensiblement au col du Venturi.

3. Un procédé de dispersion d'un fluide dans une veine fluide de densité supérieure selon la revendication 2, caractérisé en ce que le gaz est aspiré dans la veine liquide par la dépression créée au col du Venturi.

4. Un procédé de dispersion d'un fluide dans une veine fluide de densité supérieure selon la revendication 3, caractérisé en ce que l'on règle le débit du gaz aspiré en montant élastiquement, par rapport à la partie amont, la partie aval du noyau axial du Venturi qui délimite avec la partie amont la fente d'aspiration du gaz.

## Patentansprüche

1. Verfahren zur Feinverteilung eines Fluids in einen Stromfaden von höherer Dichte, bei welchem man das Fluid von höherer Dichte in Form eines Stromfadens mit großer Geschwindigkeit zirkulieren und diesen Faden einer gekrümmten Laufbahn folgen läßt, die in dem Faden einen . zufolge der Zentrifugalkraft auf die Wandung senkrecht stehenden Druckgradienten erzeugt, dadurch gekennzeichnet, daß man die Flüssigkeit in einer Leitung zirkulieren läßt, die eine Krümmung von konstanter Richtung zumindest über eine bestimmte Distanz aufweist, und daß man das Gas unter Druck direkt in die Flüssigkeit durch zumindest eine Öffnung einführt, die in der Wandung des gekrümmten Abschnittes der Leitung, der den größten Krümmungshalbmesser aufweist, hergestellt ist, d.h., die Wandung, längs welcher der Druck der Flüssigkeit zufolge des Druckgradienten am höchsten ist, wobei besagte Öffnung zumindest in einem bestimmten Abstand vom stromabwärts gelegenen Ende des besagten gekrümmten Abschnittes in einer Zone, wo der Druckgradient wirkt, gelegen ist.

2. Verfahren zur Verteilung eines Fluids in einem Stromfaden von höherer Dichte nach Anspruch 1, dadurch gekennzeichnet, daß man die Flüssigkeit in einem Venturirohr mit achsialem Kern, dessen Mittelachse des Querschnittes der Passage unterhalb des Halses nach außen konkav ist, zirkulieren läßt und das in diese Flüssigkeit zu verteilende Gas durch eine Öffnung einführt, die in der Wandung des Kernes annähernd am Hals des Venturirohres gelegen ist.

3. Verfahren zur Verteilung eines Fluids in einem Stromfaden von höherer Dichte nach Anspruch 2, dadurch gekennzeichnet, daß das Gas in den flüssigen Faden durch den Unterdruck, der am Hals des Venturirohres erzeugt wird, eingezogen wird.

4. Verfahren zur Verteilung eines Fluids in einem Stromfaden von größerer Dichte nach Anspruch 3, dadurch gekennzeichnet, daß man die Menge des eingezogenen Gases regelt, indem man, in Bezug auf den oberen Abschnitt, den stromabwärtsgelegenen Abschnitt des achsialen Kerns des Venturirohres, der mit dem oberen Abschnitt den Ansaugschlitz des Gases begrenzt, federnd anhebt.

## Claims

1. A method for finely dispersing a fluid in a jet of fluid of higher density in which the fluid of higher density is circulated in the form of a high speed jet of fluid and said jet is made to follow a curved flow path creating in the jet a pressure gradient perpendicular to the wall resulting from the centrifugal force, characterized in that the liquid is circulated in a passageway having a curvature of constant direction at least on a certain distance and the gas under pressure is introduced directly in the liquid through at least one opening formed in the wall of the passageway curved section having the largest radius of curvature, that is the wall along which the pressure in the fluid is, due to the pressure gradient, the highest, said opening being situated at least at a certain distance at the downstream end of said curved portion in a region where prevails the pressure gradient.

2. A method for dispersing a fluid in a higher density fluid jet according to claim 1, wherein the liquid is circulated in a Venturi with an axial core, whereby the medium axis of the passage section downstream of the neck has a concave configuration toward the outside and the gas to be dispersed in said fluid is introduced by an opening situated on the core wall, substantially at the Venturi neck.

3. A method for dispersing a fluid in a higher density fluid jet according to claim 2, wherein the gas is sucked into the liquid jet by the depression created at the Venturi neck.

4. A method for dispersing a fluid in a higher density fluid jet according to claim 3, wherein the flow rate of the gas which is sucked is set by resiliently mounting, with respect to the upstream portion, the downstream portion of the Venturi axial core which defines with the upstream portion the gas suction gap.

0 051 021

Fig:1

Fig:4

*Fig. 2*

*Fig. 3*